# EUROPÄISCHE PATENTANMELDUNG

(11) **EP 3 457 209 A1**
(43) Veröffentlichungstag der Anmeldung: **20.03.2019**
(21) Anmeldenummer: 18189614.3
(22) Anmeldetag: 17.08.2018
(51) Int. Cl.: G03B 17/56, G03B 15/06, G03B 17/53

(54) **FOTOKABINE**

(30) Priorität: 19.09.2017 DE 202017105681 U
(71) Anmelder: PHOTOKISTE Gesellschaft für glückliche Menschen mbH, 01097 Dresden (DE)
(72) Erfinder: EMMRICH, Nils, 01219 Dresden (DE); PIETZSCH, Gunther, 01069 Dresden (DE)
(74) Vertreter: Riechelmann & Carlsohn Patentanwälte PartG mbB

(57) **Zusammenfassung**

Die Erfindung betrifft eine Aufnahmekabine, die insbesondere zur Anfertigung von fotografischen Aufnahmen geeignet ist. Dabei ist vorgesehen, dass die Aufnahmekabine (1) eine rahmenlose Aufnahmekabine ist und Wände (2, 3, 4, 5, 6) aufweist, die aus Pappe gebildet sind.

## Beschreibung

Die Erfindung betrifft eine Aufnahmekabine. Die Aufnahmekabine ist insbesondere für die Anfertigung von fotografischen Aufnahmen, beispielsweise von Porträtfotografien geeignet.

Aufnahmekabinen erleichtern die Anfertigung fotografischer Aufnahmen. Sie ermöglichen es einem Nutzer insbesondere, Aufnahmen von sich selbst anzufertigen. Ein zusätzlicher Fotograf ist nicht erforderlich. Die Aufnahmekabinen sind in der Regel schmale Kabinen, die an öffentlichen Orten wie Flughäfen, Bahnhöfen oder touristischen Attraktionen aufgestellt werden. Sie gestatten dem Nutzer den Zutritt und schirmen ihn gegen die Umgebung ab. Eine solche Kammer wird in WO 2011/038501 A1 beschrieben. Die Kammer besitzt einen Rahmen, der die Kanten der Kammer bildet. Es sind vier senkrechte Trägerstangen vorgesehen, die an ihren Enden über acht Querstangen miteinander verbunden sind, wobei die Stangen über Verbindungselemente aneinander befestigt sind. Zwischen den Stangen sind Wände angeordnet, nämlich Seitenwände, ein Boden und eine Decke. Die Wände sind mittels Befestigungselementen an den Stangen befestigt. In einer Seitenwand befindet sich eine Ausnehmung, die einen Zutritt zum Innenraum, der von den Wänden umschlossen ist, gestattet. In einer anderen Seitenwand befindet sich eine Öffnung zur Aufnahme einer fotografischen Kamera und weiterer Ausrüstung, die im Zusammenhang mit der Anfertigung einer fotografischen Aufnahme erforderlich sein kann.

Die in WO 2011/038501 beschriebene Aufnahmekabine soll leicht montier- und demontierbar sein, um ihren Transport zu erleichtern. Dazu soll der aus den Quer- und Längsstangen gebildete Rahmen klappbar sein. Der Aufbau der Aufnahmekabine erfordert somit den Abtransport des zusammengeklappten Rahmens und der Wände, das Aufstellen des Rahmens und das Einsetzen der Wände. Dieses Verfahren mag den Transport der Aufnahmekabine vereinfachen, ihr Aufbau ist jedoch noch immer anspruchsvoll. Das Ausklappen des Gestells, das immerhin einen Innenraum, der mindestens eine Person aufnehmen soll, umgrenzen muss, erfordert ein gewisses Maß an Geschick oder Erfahrung. Das richtige Einsetzen der Wände, die sich im Hinblick auf ihre Funktion - beispielsweise weil sie den Zutritt in den Innenraum gestatten oder die fotografische Kamera aufnehmen sollen - ist umständlich und daher fehleranfällig. Darüber hinaus weist der Rahmen, der aus den Quer- und Längsstangen sowie den Verbindungselementen hergestellt wird, ein hohes Gewicht auf, insbesondere dann, wenn die Stangen aus Metall oder einer Metalllegierung gebildet sind.

Kommerziell erhältliche Aufnahmekabinen weisen typischerweise ein Materialgewicht von 100 kg und mehr auf. Das ist vor allem darauf zurückzuführen, dass die Aufnahmekabinen ganz oder teilweise aus Materialien wie Blech, Stahl, Holz oder anderen schweren Materialien bestehen.

Aufgabe der Erfindung ist es, die Nachteile nach dem Stand der Technik zu beseitigen. Es soll insbesondere eine Aufnahmekabine angegeben werden, die einen einfachen Transport und eine einfache Aufstellung erlaubt.

Diese Aufgabe wird durch die Merkmale der Ansprüche lund 11 gelöst. Zweckmäßige Ausgestaltungen der Erfindungen ergeben sich aus den Merkmalen der Unteransprüche.

Nach Maßgabe der Erfindung ist eine Aufnahmekabine vorgesehen, die insbesondere zur Anfertigung von fotografischen Aufnahmen geeignet ist. Die Aufnahmekabine ist eine rahmenlose Aufnahmekabine und weist Wände auf, die aus Pappe gebildet sind . Die Wände sind vorzugsweise rechteckige Wände.

Bei der Pappe kann es sich beispielsweise um Karton, Pappkartonage, Wabenpappe oder Kombinationen davon handeln, wobei die Aufzählung nicht abschließend ist. Die Pappe sollte über eine ausreichende Steifigkeit verfügen. Der Begriff "rahmenlos" bedeutet insbesondere, dass die Aufnahmekabine ohne zusätzliche Träger, Stützen oder Haltestangen auskommt. Die Aufnahmekabine kann somit selbsttragend sein.

Der Begriff "einstückiger Zuschnitt" beschreibt in der vorliegenden Erfindung einen einzigen, zusammenhängenden Zuschnitt. Der einstückige Zuschnitt weist Bereiche auf, die voneinander durch Falzlinien getrennt sind. Der einstückige Zuschnitt kann beispielsweise zwei Bereiche aufweisen, die durch eine Falzline getrennt sind, und zwei Wände der Aufnahmekabine im aufgestellten Zustand bilden.

Die erfindungsgemäße Aufnahmekabine ermöglicht einen einfachen Transport und eine einfache Aufstellung. Die Aufnahmekabine kann im zusammengelegten Zustand versendet werden, beispielsweise mittels eines üblichen Versandunternehmens für Pakete, wie DHL®, DPD® oder ähnlichen. Sie kann dann von einem Nutzer am Zielort aufgestellt werden. Wird die erfindungsgemäße Aufnahmekabine versendet, so liegen dabei die Wände der Aufnahmekabine mit ihren Flächenseiten aneinander an. Aus diesem Grund wird nur wenig Raum für den Versand benötigt. Damit ist der Transport der Aufnahmekabine im zusammengelegten Zustand umweltfreundlich und kostengünstig. Weil die Wände der Aufnahmekabine aus Pappe bestehen, so ist auch das Gewicht der Aufnahmekabine gering. Der Nutzer kann die Aufnahmekabine leicht aufstellen. Es ist dazu nur erforderlich, die Wände in einer vorgegebenen Weise anzuordnen, wodurch der aufgestellte Zustand der Aufnahmekabine erhalten wird. Ebenso ist es leicht, die Aufnahmekabine wieder zu demontieren, indem die Wände der Aufnahmekabine wieder in den zusammengelegten Zustand überführt werden.

Die Aufnahmekabine weist im aufgestellten Zustand einen Innenraum auf. Dieser Innenraum ist zweckmäßigerweise so bemessen, dass sich zumindest eine Person in dem Innenraum der Aufnahmekabine aufhalten kann. Vorzugsweise ist der Innenraum so bemessen, dass sich zwei oder mehr, besonders bevorzugt drei oder mehr Personen in dem Innenraum der Aufnahmekabine aufhalten können. Der Innenraum ist von den Wänden der Aufnahmekabine begrenzt. Vorzugsweise weist die Aufnahmekabine eine erste Seitenwand, eine an die erste Seitenwand angrenzende und als Rückwand dienende zweite Seitenwand sowie eine an die zweite Seitenwand angrenzende dritte Seitenwand auf. Die erste, zweite und dritte Seitenwand sind jeweils aus Pappe gebildet. Die erste, zweite und dritte Seitenwand sind vorzugsweise separate Zuschnitte. Es kann alternativ vorgesehen sein, dass zumindest zwei aneinandergrenzende Seitenwände aus einem einstückigen Zuschnitt gebildet sind. In einer Ausführungsform sind die erste, zweite und dritte Seitenwand aus einem einstückigen Zuschnitt gebildet. Die Seitenwände können in dem einstückigen Zuschnitt durch Falze voneinander getrennt sein.

Die Wände der erfindungsgemäßen Aufnahmekabine können ferner eine Deckenwand umfassen, die aus Pappe gebildet ist. Die Wände können ferner eine Bodenwand umfassen, die aus Pappe gebildet ist. Es kann somit vorgesehen sein, dass alle Wände der Aufnahmekabine aus Pappe gebildet sind. In einer bevorzugten Ausführungsform weist die Aufnahmekabine als Wände die erste Seitenwand, die zweite Seitenwand und die dritte Seitenwand sowie eine Deckenwand und eine Bodenwand auf, wobei alle Wände aus Pappe gebildet sind.

Die erfindungsgemäße Aufnahmekabine kann eine Einrichtung zur Anfertigung fotografischer Aufnahmen aufweisen. Diese Einrichtung wird im Folgenden auch als Fotoeinrichtung bezeichnet. Die Fotoeinrichtung kann an einer der Seitenwände der Aufnahmekabine angeordnet sein. Dazu kann an einer der Seitenwände eine Geräteaufnahme für eine Fotoeinrichtung ausgebildet sein. Die Geräteaufnahme für die Fotoeinrichtung ist vorzugsweise an der ersten oder dritten Seitenwand ausgebildet. Alternativ oder zusätzlich zu der Geräteaufnahme kann in einer der Seitenwände eine Aufnahmeöffnung ausgebildet sein, die einen Zugang zu einer Fotoeinrichtung ermöglicht. Eine solche Aufnahmeöffnung erlaubt es, die Fotoeinrichtung an der Außenseite einer Seitenwand derart anzubringen, dass über die Aufnahmeöffnung in der Seitenwand eine fotografische Aufnahme einer Person mittels der Fotoeinrichtung, die sich im Innenraum der Aufnahmekabine befindet, aufgenommen werden kann. Zusätzlich kann die Aufnahmeöffnung die Bedienung der Fotoeinrichtung ermöglichen. Die Aufnahmeöffnung für die Fotoeinrichtung ist vorzugsweise an der ersten oder dritten Seitenwand ausgebildet.

Bei der Fotoeinrichtung kann es sich um eine fotografische Kamera oder um ein Gerät, das eine solche Kamera aufweist, handeln. Beispielsweise kann es sich bei der Einrichtung zur Anfertigung fotografischer Aufnahmen um einen Tablett-Computer oder ein Mobiltelefon, die eine Kamera aufweisen, handeln. Die Geräteaufnahme ist zweckmäßigerweise an einer Seitenwand der Aufnahmekabine vorgesehen. Ist keine Aufnahmeöffnung in der Seitenwand ausgebildet, an der sich die Geräteaufnahme befindet, befindet sich die Geräteaufnahme zweckmäßigerweise an der Innenseite dieser Seitenwand. Ist eine Aufnahmeöffnung in der Seitenwand ausgebildet, an der sich die Geräteaufnahme befindet, befindet sich die Geräteaufnahme zweckmäßigerweise an der Außenseite dieser Seitenwand. Die Innenseite einer Seitenwand begrenzt den Innenraum der Aufnahmekabine, während die Außenseite der Seitenwand die Aufnahmekabine nach außen begrenzt.

Bei der Geräteaufnahme kann es sich beispielsweise um ein Halteelement aus Pappe, Metall oder Kunststoff handeln, wobei die Aufzählung nicht abschließend ist. Das Haltelement kann an einer Seitenwand befestigt sein und die fotografische Kamera oder das Gerät mit einer solchen Kamera halten. Alternativ kann es sich bei der Geräteaufnahme um eine Ausnehmung in der Flächenseite der Seitenwand handeln, in die die fotografische Kamera oder das Gerät mit einer solchen Kamera eingesteckt werden kann. Die Fotoeinrichtung kann mit einer Datenverarbeitungseinrichtung, einem Drucker oder beidem drahtlos oder drahtbehaftet verbunden sein. Die Datenverarbeitungseinrichtung, der Drucker oder beide können außerhalb der Aufnahmekabine angeordnet sein. Eine drahtlose Verbindung zwischen der Einrichtung zur Anfertigung fotografischer Aufnahmen einerseits und der Datenverarbeitungseinrichtung und/oder dem Drucker kann beispielsweise eine Funkverbindung, insbesondere eine Funkverbindung nach den WiFi-Kriterien sein. Auf diese Weise kann eine fotografische Aufnahme an den Drucker übertragen und dort ausgedruckt werden.

Es kann vorgesehen sein, dass sich die erste Seitenwand und die dritte Seitenwand im aufgestellten Zustand der Aufnahmekabine gegenüberliegen. Dabei kann die zweite Seitenwand mit einer ersten vertikal verlaufenden Längskante an eine Längskante der ersten Seitenwand angrenzen. Außerdem kann die zweite Seitenwand mit ihrer anderen vertikal verlaufenden Längskante an eine Längskante der dritten Seitenwand angrenzen. Die Geräteaufnahme ist vorzugsweise an der ersten oder dritten Seitenwand ausgebildet.

Die erfindungsgemäße Aufnahmekabine kann eine Deckenwand aufweisen, die im aufgestellten Zustand der Aufnahmekabine deren Decke bildet. An der Deckenwand können Stege ausgebildet sein. Es kann vorgesehen sein, dass die Deckenwand und, falls vorgesehen, deren Stege aus einem einstückigen Zuschnitt gebildet sind.

Die Deckenwand kann als separate Wand ausgebildet sein. Es kann alternativ vorgesehen sein, dass die Deckenwand an die zweite Seitenwand angelenkt ist. In einer Ausführungsform der Erfindung ist die Deckenwand - einschließlich ihrer Stege, falls solche vorgesehen sind - als einstückiger Zuschnitt mit der ersten, zweiten und dritten Seitenwand ausgebildet. Ist die Deckenwand an die zweite Seitenwand angelenkt, so kann vorgesehen sein, dass der einstückige Zuschnitt über eine Gelenkfalz mit einer Querkante der zweiten Seitenwand verbunden ist. Im aufgestellten Zustand der Aufnahmekabine ist das eine horizontale Kante, die die zweite Seitenwand nach oben begrenzt.

Weist die Deckenwand Stege auf, so können die Stege über Falze mit der Deckenwand verbunden sein. Beispielsweise können an drei oder vier Kanten der Deckenwand Stege ausgebildet sein. Im aufgestellten Zustand der Aufnahmekabine sind die Stege an den Falzen, mit denen sie mit der Deckenwand verbunden sind, rechtwinklig in Richtung des Bodens der Aufnahmekabine umgeklappt.. Auf diese Weise wird an der Deckenwand eine Krempe erhalten, die sich zumindest über die erste, zweite und dritte Seitenwand erstreckt, wobei die Stege an der jeweiligen korrespondierten Seitenwand anliegen. Ist ein vierter Steg vorgesehen, so befindet sich dieser vorzugsweise an der Zutrittsöffnung zum Innenraum der Aufnahmekabine. Zum lösbaren Befestigen der Stege der Deckenwand können Befestigungselemente vorgesehen sein. Dabei kann es sich beispielsweise um Schrauben handeln. Die Aufnahmekabine kann für diesen Zweck ein oder mehrere Befestigungselemente aufweisen. Auf diese Weise wird der erfindungsgemäßen Aufnahmekiste im aufgestellten Zustand Stabilität verliehen. Die Stabilität kann zusätzlich über ein - nachstehend beschriebenes - Halteelement zum Halten eines Vorhanges erhöht werden. Im aufgestellten Zustand sollte einer der umgeklappten Stege an der Außenseite der ersten Seitenwand, ein zweiter der umgeklappten Stege an der Außenseite der zweiten Seitenwand und ein dritter der umgeklappten Stege an der Außenseite der dritten Seitenwand anliegen. Es kann vorgesehen sein, dass zwischen den beiden, von der zweiten Seitenwand beabstandeten Querkanten der ersten und dritten Seitenwand ein zusätzlicher vierter Steg verläuft, der mit der Deckenwand verbunden ist und sich in Richtung des Bodens erstreckt. Auch dieser Steg ist dann Teil der Krempe.

In einer Ausführungsform der Erfindung weist die Aufnahmekabine eine Bodenwand auf, die im aufgestellten Zustand der Aufnahmekabine deren Boden bildet. An der Bodenwand können Stege ausgebildet sein. Es kann vorgesehen sein, dass die Bodenwand und, falls vorgesehen, deren Stege aus einem einstückigen Zuschnitt gebildet sind.

Die Bodenwand kann als separate Wand ausgebildet sein.

Alternativ kann die Bodenwand als einstückiger Zuschnitt mit der ersten, zweiten und dritten Seitenwand ausgebildet sein. Sie kann alternativ als einstückiger Zuschnitt mit der ersten, zweiten und dritten Seitenwand und der Deckenwand ausgebildet sein. In beiden Fällen kann vorgesehen sein, dass die Bodenwand an die zweite Seitenwand angelenkt ist. Die Bodenwand kann über eine Falz mit der zweiten Seitenwand verbunden sein.

Weist die Bodenwand Stege auf, so können die Stege über Falze mit der Bodenwand verbunden sein. Beispielsweise können an drei Kanten der Bodenwand Stege ausgebildet sein, so dass an einer der Kanten der Bodenwand kein Steg vorgesehen ist. Diese Kante befindet sich an der Zutrittsöffnung zur erfindungsgemäßen Aufnahmekabine. Im aufgestellten Zustand der Aufnahmekabine sind die Stege an den Falzen, mit denen sie mit der Bodenwand verbunden sind, rechtwinklig in Richtung der Decke der Aufnahmekabine umgeklappt. Auf diese Weise wird an der Bodenwand eine Krempe erhalten, die sich über die erste, zweite und dritte Seitenwand erstreckt, wobei die Stege an der jeweiligen korrespondierten Seitenwand anliegen. Zum lösbaren Befestigen der Stege der Bodenwand können Befestigungselemente vorgesehen sein. Dabei kann es sich beispielsweise um Schrauben handeln. Die Aufnahmekabine kann für diesen Zweck ein oder mehrere Befestigungselemente aufweisen. Auf diese Weise wird der erfindungsgemäßen Aufnahmekiste im aufgestellten Zustand Stabilität verliehen.

Es kann vorgesehen sein, dass in der Bodenwand eine Trittöffnung ausgebildet ist. Die Trittöffnung ist dabei so angeordnet, dass sie sich im aufgestellten Zustand der Aufnahmekabine im Trittbereich der Aufnahmekabine befindet. Der Trittbereich der Aufnahmekabine ist der Bereich, auf den der Nutzer tritt, wenn er in den Innenraum der Aufnahmekabine eintritt. Ist eine Trittöffnung in der Bodenwand vorgesehen, so tritt der Nutzer nicht auf die Bodenwand selbst, sondern in die Trittöffnung. Auf diese Weise wird eine Verschmutzung der Bodenwand verhindert. Befindet sich ein Sitzelement in der Aufnahmekabine, so kann die Trittöffnung zwischen dem Sitzelement und der dem Sitzelement gegenüberliegenden Seitenwand der Aufnahmekabine ausgebildet sein. Sitzt der Nutzer auf dem Sitzelement, so befinden sich seine Füße innerhalb der Trittöffnung.

Das Sitzelement kann im aufgestellten Zustand der Aufnahmekabine in der Aufnahmekabine angeordnet sein. Vorzugsweise ist das Sitzelement im Wesentlichen aus Pappe gebildet. Es können allerdings weitere Befestigungselemente, beispielsweise Schrauben vorgesehen sein, um Bauteile des Sitzelementes untereinander zu verbinden. Vorzugsweise grenzt das Sitzelement an eine Seitenwand und steht auf der Bodenwand. Bei der Seitenwand handelt es sich zweckmäßigerweise um die Seitenwand, die der Seitenwand gegenüberliegt, an der sich die Geräteaufnahme und/oder die Aufnahmeöffnung befinden. Befinden sich die Geräteaufnahme und/oder die Aufnahmeöffnung beispielsweise in der ersten Seitenwand, so kann das Sitzelement an die dritte Seitenwand angrenzen. Dabei kann die Trittöffnung zwischen der ersten Seitenwand und dem Sitzelement ausgebildet sein.

Es kann somit vorgesehen sein, dass das Sitzelement an eine Seitenwand angrenzt und auf der Bodenwand aufsteht, wobei die Trittöffnung in der Bodenwand in einem Bereich der Bodenwand ausgebildet ist, der zwischen dem Sitzelement und der dem Sitzelement gegenüberliegenden Seitenwand liegt.

Es kann vorgesehen sein, dass die erfindungsgemäße Aufnahmekabine zumindest ein oder mehrere Befestigungselemente zur Befestigung der Seitenwände an der Bodenwand und/oder ein oder mehrere Befestigungselemente zur Befestigung der Seitenwände an der Deckenwand aufweist. Es kann vorgesehen sein, dass die erfindungsgemäße Aufnahmekabine zumindest ein oder mehrere Befestigungselemente zur Befestigung der Bodenwand an den Seitenwänden und/oder ein oder mehrere Befestigungselemente zur Befestigung der Deckenwand an den Seitenwänden aufweist. Es kann vorgesehen sein, dass die Bodenwand im aufgestellten Zustand der Aufnahmekabine über Befestigungselemente an einer oder mehreren Seitenwänden befestigt ist. Es kann vorgesehen sein, dass die Deckenwand im aufgestellten Zustand der Aufnahmekabine über Befestigungselemente an einer oder mehreren Seitenwänden befestigt ist. Die Aufnahmekabine kann mehrere Befestigungselemente aufweisen. Bei dem oder den Befestigungselementen kann es sich um Schrauben handeln.

Die erfindungsgemäße Aufnahmekabine weist im aufgestellten Zustand zweckmäßigerweise eine Zutrittsöffnung auf, die einen Zutritt zum Innenraum der Aufnahmekabine gestattet. Vorzugsweise liegt die Zutrittsöffnung der zweiten Seitenwand gegenüber. In diesem Fall ersetzt die Zutrittsöffnung die vierte Seitenwand. Die erfindungsgemäße Aufnahmekabine kann einen Vorhang oder eine andere Einrichtung zum Verschließen der Zutrittsöffnung aufweisen. Zum Halten des Vorhangs können ein oder mehrere Halteelemente vorgesehen sein. In der ersten Seitenwand und in der dritten Seitenwand kann jeweils eine Öffnung ausgebildet sein, durch die das Halteelement geführt ist. Bei dem Halteelement kann es sich um eine Stange handeln, an der der Vorhang befestigt ist. Die Öffnungen in den beiden Seitenwänden sollten in einem Bereich der Seitenwand ausgebildet sein, der an die Oberkante der beiden Seitenwände und deren Längskante, die von der zweiten Seitenwand beabstandet ist, angrenzt.

Die erfindungsgemäße Aufnahmekabine kann eine Fotoeinrichtung aufweisen. Dabei kann vorgesehen sein, dass die Fotoeinrichtung an einer Wand der Aufnahmekabine angeordnet ist. Bei dieser Wand kann es sich um eine Seitenwand, vorzugsweise um die erste oder die dritte Seitenwand, der Aufnahmekabine handeln. In der Aufnahmekabine kann sich das oben beschriebene Sitzelement oder ein Sitzmöbel befinden. Das Sitzmöbel, beispielsweise ein Stuhl oder ein Hocker, kann an der Seitenwand der Aufnahmekabine angeordnet sein, die der Seitenwand gegenüberliegt, an der die Fotoeinrichtung angeordnet ist. Die Geräteaufnahme und/oder die Aufnahmeöffnung sollten in einer Höhe ausgebildet sein, dass der Kopf einer auf dem Sitzelement oder Sitzmöbel sitzenden Person sich in Höhe der von der Geräteaufnahme gehaltenen Fotoeinrichtung befindet.

In einer alternativen Ausführungsform der Erfindung kann ein Zuschnitt für die erfindungsgemäße Aufnahmekabine vorgesehen sein. Der Zuschnitt kann Bereiche zur Bildung von Wänden der Aufnahmekabine aufweisen, wobei zumindest zwei miteinander verbundene Abschnitte zur Bildung von aneinander angrenzenden Seitenwänden der Aufnahmekabine bestimmt sind. Die Bereiche zur Bildung der Wände können durch Falzlinien voneinander getrennt sein. In einer Ausführungsform weist der erfindungsgemäße Zuschnitt Bereiche für die Seitenwände der erfindungsgemäßen Aufnahmekabine, beispielsweise der ersten, zweiten und dritten Seitenwand auf. Der erfindungsgemäße Zuschnitt kann zusätzlich zu den Seitenwänden einen Bereich für die Deckenwand, einen Bereich für die Bodenwand oder beide Bereiche aufweisen. Außerdem kann der Zuschnitt zusätzlich zu den Seitenwänden Stege aufweisen, wie dies vorstehend im Zusammenhang mit der erfindungsgemäßen Aufnahmekabine beschrieben ist. Der Zuschnitt kann Bereiche zur Bildung aller Wände der Aufnahmekabine aufweisen. Das ist jedoch nicht erforderlich.

Nach Maßgabe der Erfindung ist eine Zusammenstellung vorgesehen, die Wände zur Herstellung einer erfindungsgemäßen Aufnahmekabine aufweist. Bei den Wänden kann es sich um die Seitenwände, die Deckenwand und die Bodenwand handeln. Die erfindungsgemäße Zusammenstellung kann ein Sitzelement aufweisen, das aus Pappe gebildet ist. Die erfindungsgemäße Zusammenstellung kann ein oder mehrere Befestigungselemente zum Befestigen der Bodenwand an den Seitenwänden und/oder eine oder mehrere Befestigungselemente zum Befestigen der Deckenwand an den Seitenwänden aufweisen. Die erfindungsgemäße Zusammenstellung kann eine Geräteaufnahme für eine Fotoeinrichtung aufweisen. Die erfindungsgemäße Zusammenstellung kann eine Fotoeinrichtung aufweisen.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: eine perspektivische Darstellung einer Ausführungsform einer erfindungsgemäßen Aufnahmekabine im aufgestellten Zustand;
- Fig. 2: eine perspektivische Darstellung der in Fig. 1 gezeigten Ausführungsform der erfindungsgemäßen Aufnahmekabine mit einem Vorhang;
- Fig. 3: eine perspektivische Darstellung der in Fig. 1 gezeigten Ausführungsform der erfindungsgemäßen Aufnahmekabine mit einem Vorhang und einem Sitzelement;
- Fig. 4: eine schematische vertikale Schnittdarstellung der in Fig. 1 gezeigten Ausführungsform der erfindungsgemäßen Aufnahmekabine mit einem Vorhang, einem Sitzelement und einer Fotoeinrichtung;
- Fig. 5: eine schematische horizontale Schnittdarstellung der in Fig. 4 gezeigten Aufnahmekabine;
- Fig. 6: Zuschnitte für die in Fig. 1 gezeigte Ausführungsform der erfindungsgemäßen Aufnahmekabine; und
- Fig. 7: Zuschnitte für ein Sitzelement.

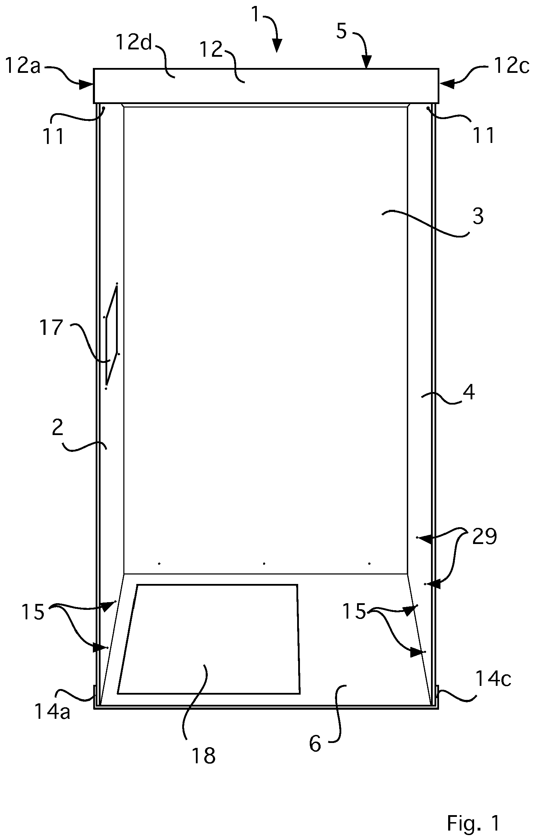

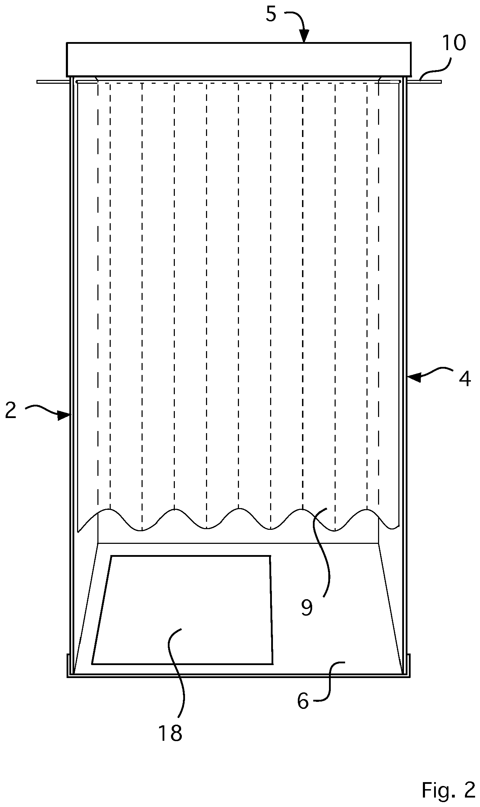

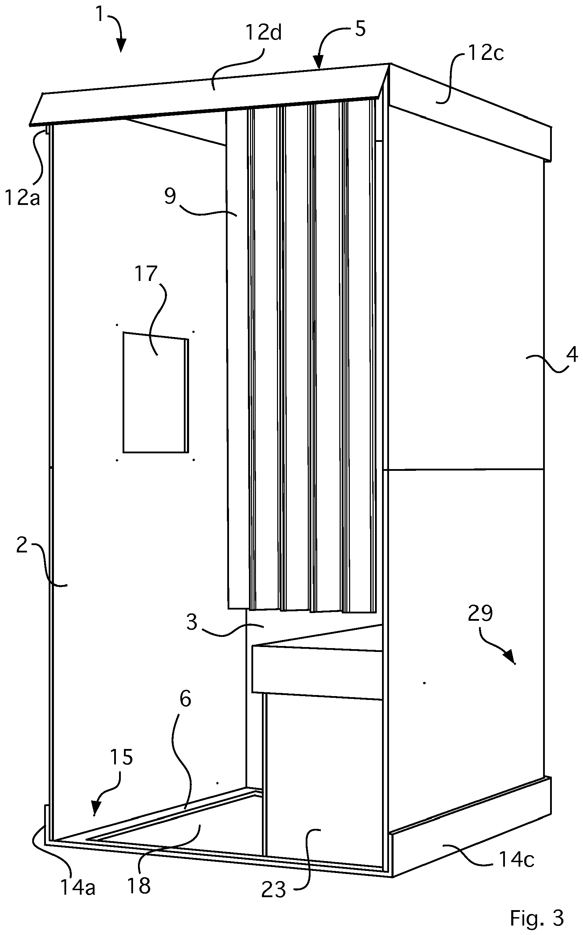

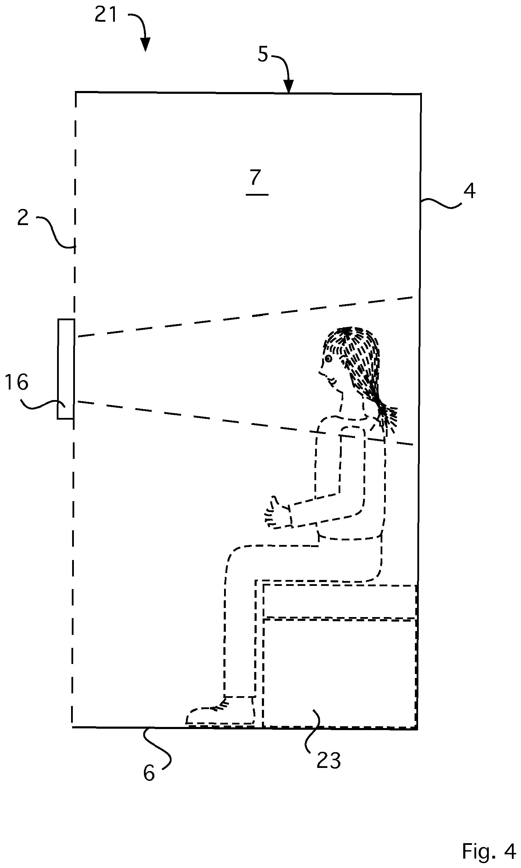

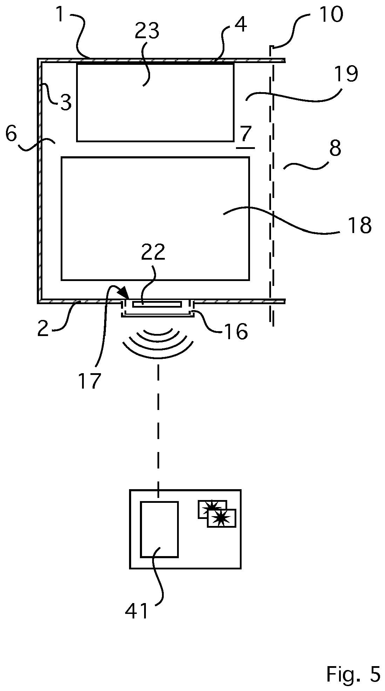

In den Figuren 1 bis 5 ist eine Ausführungsform der erfindungsgemäßen Aufnahmekabine 1 im aufgestellten Zustand gezeigt. Die Aufnahmekabine weist eine erste Seitenwand 2, eine zweite Seitenwand 3 und eine dritte Seitenwand 4 sowie eine Deckenwand 5 und eine Bodenwand 6 auf, die einen Innenraum 7 (siehe insbesondere Figuren 4 und 5) begrenzen. Der Innenraum 7 weist einen annähernd rechteckigen horizontalen Querschnitt auf. Die erste Seitenwand 2 grenzt mit einer ihrer Längskanten an eine Längskante der zweiten Seitenwand 3 an. Mit ihrer anderen Längskante grenzt die zweite Seitenwand an eine Längskante der dritten Seitenwand 4 an. Die erste Seitenwand 2 liegt damit der dritten Seitenwand 4 gegenüber. Zwischen der Längskante der ersten Seitenwand 2, die der zweiten Seitenwand 3 abgewandt ist, und der Längskante der dritten Seitenwand 4, die der zweiten Seitenwand 3 abgewandt ist, befindet sich die Zutrittsöffnung 8 (siehe Fig. 5). Die Zutrittsöffnung 8 ist mittels eines Vorhanges 9 teilweise verschlossen, der an einer Stange 10 hängt. Die Stange 10 ist durch Öffnungen 11 geführt, die in der ersten Seitenwand 2 und dritten Seitenwand 4 ausgebildet sind, und zwar jeweils in einem Bereich, der an die Oberkanten und die der zweiten Seitenwand 4 abgewandten Längskanten dieser Seitenwände 2, 4 angrenzt.

An der Deckenwand 5 sind Stege 12 vorgesehen, die im aufgestellten Zustand der Aufnahmekabine 1 in Richtung der Bodenwand um einen Winkel von 90° umgeklappt sind. Im umgeklappten Zustand liegt dabei ein erster Steg 12a außen an der ersten Seitenwand 2, ein zweiter Steg 12b an der zweiten Seitenwand 3 und ein dritter Steg 12c an der dritten Seitenwand 4 an. Der erste, zweite und dritte Steg 12a, 12b, 12c können mittels Befestigungselementen (nicht gezeigt) an den Seitenwänden 2, 3, 4 befestigt sein. Der vierte Steg 12d befindet sich an der Zutrittsöffnung 8 zur Aufnahmekabine 1. Die Stege 12a, 12b und 12c, verleihen, wenn sie an den Seitenwänden 2, 3 und 4 befestigt sind, der Aufnahmekabine im aufgestellten Zustand Stabilität. In der ersten Seitenwand 2 ist eine Aufnahmeöffnung 17 ausgebildet, die die Anfertigung von Fotos mittels einer Fotoeinrichtung, beispielsweise einem Tablett-Computer 22, und die Bedienung der Fotoeinrichtung ermöglicht.

An der Bodenwand 6 befinden sich Stege 14, die im aufgestellten Zustand der Aufnahmekabine 1 in Richtung der Deckenwand um einen Winkel von 90° umgeklappt sind. Es sind drei Stege 14 vorgesehen. Im umgeklappten Zustand liegt dabei ein erster Steg 14a außen an der ersten Seitenwand 2, ein zweiter Steg 14b an der zweiten Seitenwand 3 und ein dritter Steg 12c an der dritten Seitenwand 4 an. Der erste, zweite und dritte Steg 14a, 14b, 14c können mittels Schrauben an den Steinwänden befestigt sein. Der erste, zweite und dritte Steg 14a, 14b, 14c können mittels Befestigungselementen 15 an den Seitenwänden 2, 3, 4 befestigt sein. An der Kante der Bodenwand 6, die sich an der Zutrittsöffnung 8 zur Aufnahmekabine 1, befindet ist kein Steg vorgesehen. Die Stege 14a, 14b und 14c, verleihen, wenn sie an den Seitenwänden 2, 3 und 4 befestigt sind, der Aufnahmekabine im aufgestellten Zustand Stabilität.

In der Bodenwand 6 ist eine Trittöffnung 18 ausgebildet, die zwischen der ersten Seitenwand 2 und einem Bereich 19 liegt, der an die dritte Seitenwand 4 angrenzt. Auf dem Bereich 19 der Bodenwand 6 kann ein Sitzelement 23 oder ein Sitzmöbel aufgestellt werden.

Die Figuren 4 und 5 zeigen die Aufnahmekabine 1 mit einem Tablett-Computer 22, beispielsweise ein iPad®, als Fotoeinrichtung sowie einem Sitzelement 23. Der Tablett-Computer 22 wird von der Geräteaufnahme 16, die an der Außenseite der ersten Seitenwand 2 der Aufnahmekabine 1 mittels Befestigungselementen, beispielsweise Schrauben, lösbar befestigt ist, und zwar derart, dass die Anfertigung von Aufnahmen und die Bedienung des Tablett-Computers 22 von einem Nutzer, der sich im Innenraum 7 der Aufnahmekabine 1 befindet, möglich ist. Die Aufnahmeöffnung 17 und die Geräteaufnahme 16 befinden sich zweckmäßigerweise in einer Höhe, die annähernd der Kopfhöhe des Nutzers entspricht. Das Sitzelement 23 grenzt mit seiner Rückseite an die dritte Seitenwand 4 an, so dass der Benutzer dem Tablett-Computer 22 gegenübersitzt. Fotografische Aufnahmen, die mittels des Tablett-Computers 22 aufgenommen werden, können an einen Drucker 31 übertragen werden, der außerhalb der Aufnahmekabine 1 angeordnet ist. Die Übertragung kann per Funk, beispielsweise per WLAN ("WiFi") erfolgen. Mittels des Druckers kann die fotografische Aufnahme ausgedruckt werden.

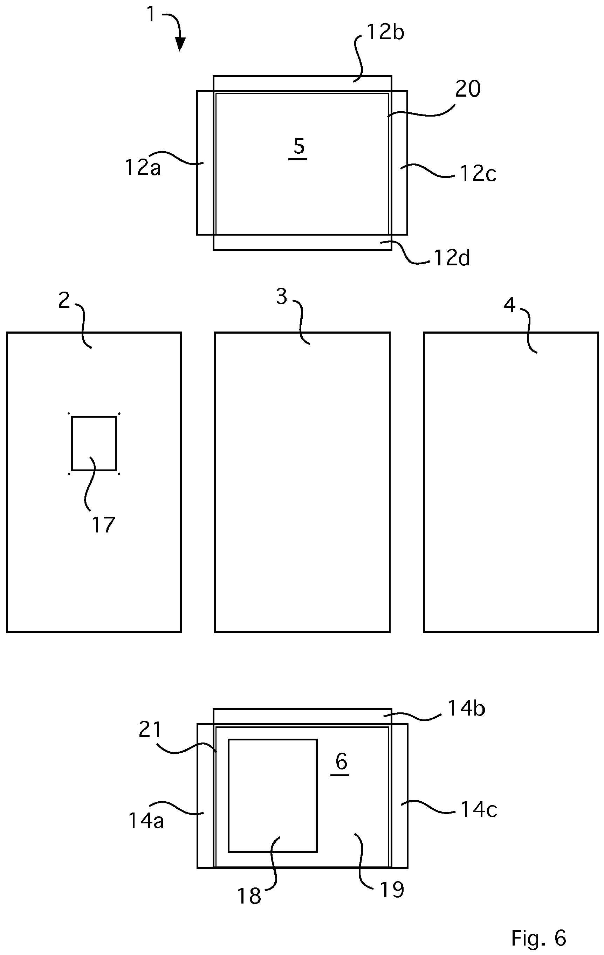

Fig. 6 zeigt die Wände 2, 3, 4, 5, 6 der Aufnahmekabine 1 vor deren Aufbau oder nach deren Demontage. Es ist zu erkennen, dass die Deckenwand 5 einstückig mit vier Stegen 12a, 12b, 12c, 12d ausgebildet ist, wobei zwischen der Deckenwand 5 und den Stegen 12a, 12b, 12c, 12d Falze 20 ausgebildet sind, die ein Umklappen der Stege 12a, 12b, 12c, 12d ermöglichen. Es ist ferner zu erkennen, dass die Bodenwand 6 einstückig mit drei Stegen 14a, 14b, 14c ausgebildet ist, wobei zwischen der Bodenwand 6 und den Stegen 14a, 14b, 14c Falze 21 ausgebildet sind, die ein Umklappen der Stege 14a, 14b, 14c ermöglichen. Ohne Berücksichtigung der Stege 12, 14 haben die Wände 2, 3, 4, 5, 6 der Aufnahmekabine 1 jeweils eine rechteckige Grundfläche.

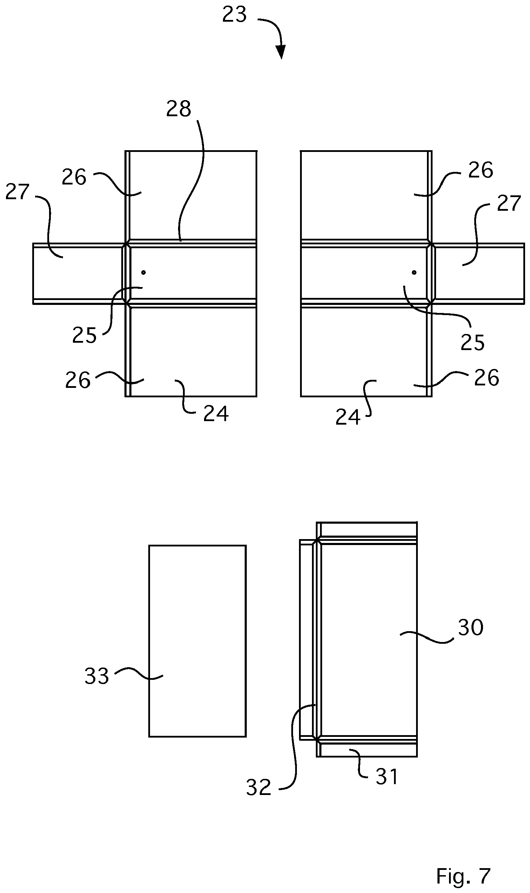

Fig. 7 zeigt Zuschnitte aus Pappe für ein Sitzelement 23. Das Sitzelement wird aus zwei ersten Zuschnitten erhalten, die jeweils ein Bein 24 des Sitzelementes 23 bilden. Dazu weist jeder Zuschnitt 24 einen Hauptbereich 25 auf, wobei an zwei gegenüberliegenden Kanten des Hauptbereiches 25 klappbare Stützbereiche 26 und an einer weiteren Kante des Hauptbereiches ein Deckbereich 27 ausgebildet sind, die jeweils über eine Falz 28 mit dem Hauptbereich 25 verbunden sind. Im aufgebauten Zustand liegt der Hauptbereich 25 an der Innenseite der dritten Seitenwand 4 an und kann dort mittels Befestigungselementen 29, beispielsweise Schrauben, lösbar befestigt sein. Dabei sitzt der Hauptbereich 25 mit seiner Kante, an die keine klappbaren Bereiche 26, 27 angrenzen, auf der Innenseite der Bodenwand 6 auf. Die Stützbereiche 26 erstrecken sich dabei orthogonal zum Hauptbereich 25 in Richtung der ersten Seitenwand 2. Dabei werden die beiden Beine im größtmöglichen Abstand zueinander auf der Bodenwand 6 aufgestellt. Der Bereich 27 liegt auf den Kanten der Stützbereiche 26 auf. Der Hauptbereich 25 und die Bereiche 26, 27 haben jeweils eine rechteckige Grundfläche. Der Hauptbereich 25 ist einstückig mit den Bereichen 26, 27 ausgebildet. Die Stützbereiche 26 tragen im wesentlichen Maße die Last des Nutzers, wenn dieser auf dem Sitzelement 23 sitzt.

Mittels eines zweiten Zuschnittes kann eine Deckplatte 30 gebildet werden, die auf die Stützbereiche 26 beider Beine aufgebracht wird und die gleichfalls eine rechteckige Grundfläche aufweist. An drei Kanten der Deckplatte 30 sind Stege 31 ausgebildet, die über Falze 32 mit der Deckplatte 30 verbunden sind. Die Deckplatte 30 ist einstückig mit den Stegen 31 ausgebildet. Die Deckplatte wird auf die Stützbereiche 26 derart aufgelegt, dass sie mit ihrer Kante, an der kein Steg 31 ausgebildet ist, an die Innenseite der dritten Seitenwand 4 angrenzt. Dabei sind die Stege 31 nach unten in Richtung des Bodens abgeklappt. Zur Abdeckung der Lücken zwischen den Stützbereichen 26 der beiden Beine und zwischen den beiden Beinen selbst kann ein dritter Zuschnitt in Form einer Schutzplatte 33 vorgesehen sein, die an den Kanten der Stützbereiche 26, die der Innenseite der dritten Seitenwand 4 abgewandt sind, anliegt und sich von der Bodenwand bis zur Deckplatte 30 erstreckt, wobei der mittlere Steg 31 über die Schutzplatte 33 geklappt ist, so dass er an der Seite der Schutzplatte 33 anliegt, die der ersten Seitenwand 2 zugewandt ist.

### Bezugszeichenliste

- 1: Aufnahmekabine
- 2: erste Seitenwand
- 3: zweite Seitenwand
- 4: dritte Seitenwand
- 5: Deckenwand
- 6: Bodenwand
- 7: Innenraum
- 8: Zutrittsöffnung
- 9: Vorhang
- 10: Vorhangstange
- 11: Öffnung
- 12: Steg
- 13: Lasche
- 14: Steg
- 15: Befestigungselement
- 16: Geräteaufnahme
- 17: Aufnahmeöffnung
- 18: Trittöffnung
- 19: Bereich für die Aufstellung eines Sitzelementes
- 20: Falz
- 21: Falz
- 22: Tablett-Computer
- 23: Sitzelement
- 24: erster Zuschnitt für ein Bein
- 25: Hauptbereich
- 26: Stützbereich
- 27: Deckbereich
- 28: Falz
- 29: Befestigungselement
- 30: Deckplatte
- 31: Steg
- 32: Falz
- 33: Schutzplatte

- 41: Drucker

## Patentansprüche

1. Aufnahmekabine, insbesondere zur Anfertigung von fotografischen Aufnahmen, wobei die Aufnahmekabine (1) eine rahmenlose Aufnahmekabine ist und Wände (2, 3, 4, 5, 6) aufweist, die aus Pappe gebildet sind.

2. Aufnahmekabine nach Anspruch 1, **dadurch gekennzeichnet, dass** sie im aufgestellten Zustand einen Innenraum (7) aufweist, der von den Wänden (2, 3, 4, 5, 6) begrenzt wird, wobei die Wände (2, 3, 4, 5, 6) zumindest eine erste Seitenwand (2), eine an die erste Seitenwand (2) angrenzende und als Rückwand dienende zweite Seitenwand (3) sowie eine an die zweite Seitenwand (3) angrenzende dritte Seitenwand (4) umfassen, wobei die erste Seitenwand (2), die zweite Seitenwand (3) und die dritte Seitenwand (4) aus Pappe gebildet sind.

3. Aufnahmekabine nach Anspruch 2, **dadurch gekennzeichnet, dass** die Wände (2, 3, 4, 5, 6) ferner eine Deckenwand (5), die aus Pappe gebildet ist, und/oder eine Bodenwand (6), die aus Pappe gebildet ist, umfassen.

4. Aufnahmekabine nach einem der vorstehenden Ansprüche, **dadurch gekennzeichnet, dass** sie eine Einrichtung (22) zur Anfertigung fotografischer Aufnahmen aufweist.

5. Aufnahmekabine nach einem der Ansprüche 2 bis 4, **dadurch gekennzeichnet, dass** sich die erste Seitenwand (2) und die dritte Seitenwand (4) im aufgestellten Zustand der Aufnahmekabine (1) gegenüberliegen, wobei die zweite Seitenwand (3) mit einer ersten vertikal verlaufenden Längskante an eine Längskante der ersten Seitenwand (2) angrenzt und wobei die zweite Seitenwand (3) mit ihrer anderen vertikal verlaufenden Längskante an eine Längskante der dritten Seitenwand (4) angrenzt.

6. Aufnahmekabine nach einem der vorstehenden Ansprüche, **dadurch gekennzeichnet, dass** an einer der Seitenwände (2) eine Geräteaufnahme (16) für eine Einrichtung (22) zur Anfertigung fotografischer Aufnahmen ausgebildet ist.

7. Aufnahmekabine nach einem der Ansprüche 2 bis 6, **dadurch gekennzeichnet, dass** in einer der Seitenwände (2) eine Aufnahmeöffnung (17) ausgebildet ist, die einen Zugang zu einer Einrichtung (22) zur Anfertigung fotografischer Aufnahmen ermöglicht.

8. Aufnahmekabine nach Anspruch 6 oder Anspruch 7, **dadurch gekennzeichnet, dass** die Geräteaufnahme (16) und/oder die Aufnahmeöffnung (17) an der ersten oder dritten Seitenwand (2, 4) ausgebildet ist.

9. Aufnahmekabine nach einem der Ansprüche 4 bis 8, **dadurch gekennzeichnet, dass** die Einrichtung (22) zur Anfertigung fotografischer Aufnahmen ein Tablett-Computer oder ein Mobiltelefon ist, die eine Kamera aufweisen.

10. Aufnahmekabine nach einem der Ansprüche 3 bis 9, **dadurch gekennzeichnet, dass** in der Bodenwand (6) eine Trittöffnung (18) ausgebildet ist und die Trittöffnung (18) so angeordnet ist, dass sich im aufgestellten Zustand der Aufnahmekabine (1) die Trittöffnung im Trittbereich der Aufnahmekabine (1) befindet.

11. Zusammenstellung, aufweisend Wände (2, 3, 4, 5, 6) zur Herstellung einer Aufnahmekabine (1) nach einem der Ansprüche 1 bis 10.

12. Zusammenstellung nach Anspruch 11, **dadurch gekennzeichnet, dass** die Wände die Seitenwände (2, 3, 4), die Deckenwand (5) und die Bodenwand (6) sind.

13. Zusammenstellung nach Anspruch 11 oder Anspruch 12, **dadurch gekennzeichnet, dass** sie ferner ein Sitzelement (23) aufweist, das aus Pappe gebildet ist.

14. Zusammenstellung nach einem der Ansprüche 11 bis 13, **dadurch gekennzeichnet, dass** sie ferner eine Geräteaufnahme (16) für eine Einrichtung (22) zur Anfertigung fotografischer Aufnahmen aufweist.

15. Zusammenstellung nach einem der Ansprüche 11 bis 14, **dadurch gekennzeichnet, dass** sie ferner eine Einrichtung (22) zur Anfertigung fotografischer Aufnahmen aufweist.
